# EUROPÄISCHE PATENTSCHRIFT

(11) **EP 3 286 999 B1**
(45) Veröffentlichungstag und Bekanntmachung des Hinweises auf die Patenterteilung: **01.07.2020**
(21) Anmeldenummer: 17160515.7
(22) Anmeldetag: 13.03.2017
(51) Int. Cl.: A01D 57/20, A01D 41/14, A01D 75/28

(54) **BANDSCHNEIDWERK**
BELT CUTTING UNIT
COUPE-RUBANS

(30) Priorität: 23.08.2016 DE 102016115589
(43) Veröffentlichungstag der Anmeldung: 28.02.2018
(73) Patentinhaber: CLAAS Selbstfahrende Erntemaschinen GmbH, 33428 Harsewinkel (DE)
(72) Erfinder: Füchtling, Christian, 48317 Drensteinfurt (DE); Beschorn, Udo, 33428 Harsewinkel (DE); Köhler, Mathieu, 33428 Harsewinkel (DE); Hinz, Thomas, 33428 Haarsewinkel (DE); Sagemüller, Burkhard, 33335 Gütersloh (DE); Wielenberg, Andreas, 32049 Herford (DE); Tillmann, Balazs, 5000 Szolnok (HU); Hamphoff, Berthold, 48361 Beelen (DE)
(74) Vertreter: CLAAS Gruppe

(56) Entgegenhaltungen:
- EP-A1- 2 382 854
- US-A1- 2015 135 675
- US-B1- 8 087 224

## Beschreibung

Die vorliegende Erfindung betrifft einen Mähdrescher mit einem Bandschneidwerk gemäß dem Oberbegriff des Anspruchs 1.

Vorsatzgeräte für Erntemaschinen weisen eine Fördervorrichtung hinter den Messerbalken auf, um das abgeschnittenes Erntegut über die gesamte Breite des Vorsatzgerätes einem häufig mittig angeordneten Einzugskanal eines Schrägförderers zuzuführen. Insbesondere werden als Fördervorrichtungen Einzugsschnecken, das heißt Walzen mit gegenläufigen Schneckenwindungen und/oder Förderbänder verwendet. Vorsatzgeräte, deren Erntegutförderung zum Einzugskanal im Wesentlichen mittels Förderbändern erfolgt, werden Bandschneidwerke genannt.

Die Förderbänder der Bandschneidwerke fördern das Erntegut schonender und gleichmäßiger zum Einzugskanal als Einzugsschnecken, insbesondere auch bei geringen Erntegutmengen. Bandschneidwerke weisen zudem in der Regel ein geringeres Gewicht auf, wodurch insbesondere große Schneidwerksbreiten möglich sind. Des Weiteren ermöglichen sie höhere Erntegutdurchsätze.

Dabei ist es vorteilhaft, ein Mittenband zur Förderung des Erntegutes zum Einzugskanal zu nutzen, welches von benachbarten Querförderbändern mit Erntegut beschickt wird. Zur optimalen Erntegutförderung mittels Förderbändern ist es zudem vorteilhaft, die Bandgeschwindigkeit der Förderbänder an den Erntegutdurchsatz anzupassen.

Die Druckschrift US 2015/0135675 A1 offenbart eine Steuerung der Förderbandgeschwindigkeit in Abhängigkeit von der Hangneigung. Dabei sind die Bandgeschwindigkeiten des Mittenbandes und der Querförderbänder individuell in Abhängigkeit von der Hangneigung einstellbar. Nachteilig ist hier, dass die Bandgeschwindigkeitsteuerung nur bei Hangneigung aktiv ist.

Es hat sich gezeigt, dass das dargestellte Bandschneidwerk und die gezeigte Steuerung der Bandgeschwindigkeit der Förderbänder für einen optimalen Erntegutdurchsatz nicht ausreichend sind.

Aufgabe der Erfindung ist es, die bestehenden Nachteile des Standes der Technik und insbesondere einen selbstfahrenden Mähdrescher mit einem Bandschneidwerk und einer alternative Steuerung der Bandgeschwindigkeit der Förderbänder zu schaffen, die den Erntegutdurchsatz verbessert.

Die Aufgabe wird gelöst mit einem Mähdrescher mit den Merkmalen des unabhängigen Patentanspruchs 1. Vorteilhafte Ausführungsformen sind den abhängigen Ansprüchen entnehmbar.

Indem ein Mähdrescher mit einem Bandschneidwerk, das mindestens ein Mittenband zur Förderung von Erntegut zu einer Einzugswalze und/oder zu einem Einzugskanal eines Schrägförderers, und mindestens ein linksseitig und ein rechtsseitig zu dem Mittenband angeordnetes Querförderband zur Förderung des Erntegutes zum Mittenband umfasst und das Mittenband, das linksseitige und das rechtsseitige Querförderband in Fahrtrichtung hinter einem Messerbalken angeordnet sind, und das Mittenband, das linksseitige und das rechtsseitige Querförderband jeweils mit einer individuellen Bandgeschwindigkeit betreibbar sind, der Mähdrescher und/oder das Bandschneidwerk eine Steuereinheit aufweist, und die Steuereinheit dazu eingerichtet ist, die Bandgeschwindigkeiten des linksseitigen und des rechtsseitigen Querförderbandes jeweils in Abhängigkeit von einer Vorfahrtsgeschwindigkeit, und die Bandgeschwindigkeit des Mittenbandes in Abhängigkeit von der Vorfahrtsgeschwindigkeit oder in Abhängigkeit von der Bandgeschwindigkeit des linksseitigen und des rechtsseitigen Querförderbandes automatisch zu steuern, wird sichergestellt, dass die Durchsatzleistung verbessert wird, indem die Förderleistung an spezifische Bedingungen individuell anpassbar ist. Die Vorfahrtsgeschwindigkeit steht in einem direkten Verhältnis zur vom Bandschneidwerk aufzunehmenden Erntegutmenge pro Zeiteinheit. Die Bandgeschwindigkeiten können somit durch die automatische Steuerung der Bandgeschwindigkeiten in Abhängigkeit von der Vorfahrtsgeschwindigkeit automatisch an die Erntegutmengen pro Zeiteinheit angepasst werden, wodurch der Erntegutdurchsatz optimiert und vergleichmäßigt wird. Des Weiteren wird eine Gefahr der Überlastung des Mittenbandes und/oder der Querförderbänder durch zu viel Erntegut reduziert. Zudem kann die Bandgeschwindigkeit des Mittenbandes verschieden zu den Bandgeschwindigkeiten der Querförderbänder eingestellt werden. Somit kann die Bandgeschwindigkeit des Mittenbandes auf einfache Weise an die zusätzliche Beschickung mit Erntegut durch die Querförderbänder angepasst werden.

In einer ersten vorteilhaften Ausgestaltung der Erfindung ist vorgesehen, dass die Bandgeschwindigkeiten des linksseitigen und des rechtsseitigen Querförderbandes und/oder die Bandgeschwindigkeit des Mittenbands an die Vorfahrtsgeschwindigkeit gekoppelt sind. Dadurch kann die Steuereinheit die Bandgeschwindigkeiten in Abhängigkeit von der Erntegutmenge auf einfache Weise steuern.

In einer weiteren vorteilhaften Ausgestaltung der Erfindung ist hingegen vorgesehen, dass die Bandgeschwindigkeit des Mittenbands an die Bandgeschwindigkeiten zumindest des linksseitigen und/oder des rechtsseitigen Querförderbandes gekoppelt ist. Dadurch kann die Bandgeschwindigkeit des Mittenbandes auf einfache Weise an die Bandgeschwindigkeit der Querförderbänder angepasst werden. Somit kann die Bandgeschwindigkeit des Mittenbandes an den Erntegutfluss von den Querförderbändern angepasst werden. Es kann ein optimales Verhältnis der Bandgeschwindigkeiten zueinander eingestellt werden. Zudem kann das optimale Verhältnis der Bandgeschwindigkeiten zueinander bei Änderung der Vorfahrtsgeschwindigkeit beibehalten werden.

Gemäß einer weiteren vorteilhaften Ausgestaltung der Erfindung ist vorgesehen, dass die Bandgeschwindigkeit des Mittenbandes, die Bandgeschwindigkeit des linksseitigen Querförderbandes und/oder die Bandgeschwindigkeit des rechtsseitigen Querförderbandes erntegutartspezifisch an die Vorfahrtsgeschwindigkeit gekoppelt sind, insbesondere derart, dass bei Getreide höhere Bandgeschwindigkeiten und bei Raps niedrigere Bandgeschwindigkeiten eingestellt werden. Dies hat unter anderem den Effekt, dass bei Erntegut mit einer geringen Dichte, wie zum Beispiel Raps, ein Schlupf zwischen dem Erntegut und dem Mittenband und den Querförderbändern verhindert oder verringert wird und das Erntegut zuverlässig von dem Mittenband und den Querförderbändern erfasst wird.

In einer bevorzugten Ausgestaltung der Erfindung sind für das Mittenband, das linksseitige und das rechtsseitige Querförderband eine minimale Bandgeschwindigkeit und eine maximale Bandgeschwindigkeit einstellbar. Durch die minimale Bandgeschwindigkeit wird ein Stoppen des Mittenbandes und der Querförderbänder bei langsamer Vorfahrtsgeschwindigkeit vermieden. Durch die maximale Bandgeschwindigkeit wird verhindert, dass der Schlupf zwischen dem Erntegut und dem Mittenband und den Querförderbändern zu groß wird. Dadurch wird das Erntegut vom Mittenband und den Querförderbändern zuverlässiger erfasst und gefördert.

Damit die höheren Erntegutmengen auf dem Mittenband aufgrund des zusätzlichen Erntegutes von den Querförderbänder nicht zu einer Anhäufung des Erntegutes vor dem Einzugskanal und dadurch zu einer Verstopfung des Einzugskanals und/oder Blockierung des Kettenförderers des Schrägförderers führen, weist das Mittenband vorzugsweise eine höhere Bandgeschwindigkeit als das linksseitige und das rechtsseitige Querförderband auf.

In einer weiteren vorteilhaften Ausgestaltung der Erfindung ist vorgesehen, dass bei Hangneigung die Bandgeschwindigkeiten des linksseitigen und des rechtsseitigen Querförderbandes in Abhängigkeit von der Hangneigung des Bandschneidwerks und den Förderrichtungen des linksseitigen und des rechtsseitigen Querförderbandes gesteuert werden, insbesondere die Bandgeschwindigkeit des bergauffördernden Querförderbandes erhöht und/oder die Bandgeschwindigkeit des bergabfördernden Querförderbandes reduziert wird. Dadurch kann eine neigungsbedingte Bergabbewegung des Ernteguts kompensiert werden und das Erntegut bei Hangneigung gleichmäßig gefördert werden.

Um ein Herunterrollen des Erntegutes vom Mittenband und einen schnellen Abtransport des Erntegutes vom Mittenband zu ermöglichen, ist in einer vorteilhaften Ausgestaltung zudem vorgesehen, dass die Bandgeschwindigkeit des Mittenbands in Abhängigkeit der Hangneigung des Bandschneidwerks regelbar ist.

Indem beim Herausfahren aus einem Erntegutbestand die Bandgeschwindigkeiten des Mittenbandes, des linksseitigen und des rechtsseitigen Querförderbandes auf die minimale Bandgeschwindigkeit absenkt werden, ist in einer vorteilhaften Ausgestaltung der Erfindung sichergestellt, dass der Verschleiß des Mittenbandes und der Querförderbänder gering gehalten wird. Zudem wird dadurch der Energieverbrauch reduziert.

In einer weiteren vorteilhaften Ausgestaltung der Erfindung ist vorgesehen, dass die Bandgeschwindigkeiten des linksseitigen und des rechtsseitigen Querförderbandes und die Bandgeschwindigkeit des Mittenbands in einem Bereich zwischen der minimale Bandgeschwindigkeit und der maximalen Bandgeschwindigkeit manuell einstellbar sind. Dadurch kann der Fahrzeugführer erforderliche Bandgeschwindigkeiten selbst einstellen, falls unter anderem der Erntegutzustand, z.B. die Erntegutfeuchte, oder die Bestandsdichte dies erforderlich macht. Vorzugsweise kann der Fahrzeugführer zwischen einem automatischen Modus, bei dem die Steuereinheit steuert, und einem manuellen Modus umschalten.

Indem in einer vorteilhaften Ausgestaltung der Erfindung die Förderrichtungen des Mittenbandes, des linksseitigen und des rechtsseitigen Querförderbandes umkehrbar sind, kann eine Blockierung der Förderbänder wieder beseitigt werden, ohne dass der Fahrzeugführer die Fahrerkabine verlassen muss. Blockierungen der Förderbänder können insbesondere bei Verklemmung von Steinen zwischen den Querförderbändern und dem Mittenband auftreten. Ebenso kann eine Aufwicklung von Stroh am Mittenband oder an den Querförderbändern zu einer Blockierung führen. Vorzugsweise sind eine Verzögerung und eine Beschleunigung des Mittenbandes und der Querförderbänder gering. Dieser Sanftanlauf hat den Vorteil, dass Aktoren, wie zum Beispiel Hydromotoren, und weiteren Bauteile des Bandschneidwerkes durch ein kleineres Momentum geschont werden.

In einer weiteren bevorzugten Ausgestaltung weist der Schrägförderer einen Kettenförderer auf, und eine Drehrichtung der Einzugswalze und/oder eine Förderrichtung des Kettenförderers des Schrägförderers und die Förderrichtung des Mittenbands sind gemeinschaftlich umkehrbar, und das linksseitige und das rechtsseitige Querförderband sind stoppbar. Dadurch kann bei einer Blockierung oder Überlastung des Kettenförderers des Schrägförderers mit zu viel Erntegut, oder bei einer Blockierung des Einzugskanals durch angehäuftes Erntegut ein Einzug des Erntegutes reversiert werden. Das dabei in Fahrtrichtung aus dem Schrägförderer herausgeförderte Erntegut wird von der Einzugswalze wieder zum Mittenband gefördert, welches das Erntegut in Fahrtrichtung FR und vor das Bandschneidwerk fördert. Dadurch und durch den Stopp der Querförderbänder wird eine Anhäufung von Erntegut auf dem Mittenband oder vor der Einzugswalze vermieden, was bei einer Wiederaufnahme des Erntevorgangs eine wiederholte Blockierung verhindert. Vorzugsweise erfolgen eine Verzögerung und eine Beschleunigung des Mittenbandes langsam. Dieser Sanftanlauf hat hier insbesondere den Vorteil, dass der Schlupf zwischen dem Erntegut und dem Mittenband gering gehalten wird. Dadurch wird das Erntegut besser erfasst und schneller in die umgekehrte Förderrichtung gefördert.

In einer weiteren vorteilhaften Ausgestaltung der Erfindung weist der Mähdrescher in einer Fahrerkabine einen Multifunktionsgriff mit einem Schalter auf, wobei der Schalter in einer ersten Schaltstellung das Mittenband, das linksseitige und das rechtsseitige Querförderband reversiert und in einer zweiten Schaltstellung die Bandgeschwindigkeiten des Mittenbandes, des linksseitigen und des rechtsseitigen Querförderbandes auf einen festgelegten Wert abgesenkt, insbesondere auf 25% der eingestellten Bandgeschwindigkeiten. Diese Ausgestaltung hat den Vorteil, dass der Fahrer einen direkten und schnellen Zugriff auf die wichtigsten Funktionen hat. Das Reversieren, das heißt Umkehren der Förderrichtungen, dient dem Auflösen von Blockaden des Mittenbandes und/oder der Querförderbänder. Durch die temporäre Absenkung der Bandgeschwindigkeiten auf 25% der durch die Steuereinheit oder durch den Fahrzeugführer eingestellten Bandgeschwindikeiten, kann der Fahrer auf lokale geringe Bestandsdichten reagieren, um einen Erntegutstrom zu vergleichmäßigen. Indem vorzugsweise das Bandschneidwerk hinter dem Mittenband eine Einzugswalze zum Einzug des Erntegutes in den Einzugskanal aufweist und/oder mindestens eine Leitschnecke zum Fördern von Erntegut zur Einzugswalze und/oder zu dem Mittenband aufweist, und die Steuereinheit dazu eingerichtet ist, eine Drehzahl der Einzugswalze und/oder eine Drehzahl der Leitschnecke in Abhängigkeit von der Vorfahrtsgeschwindigkeit zu steuern, wird sichergestellt, dass das Erntegut störungsfrei an den Schrägförderer des Mähdreschers übergeben wird. Die Drehzahlen können auf einfache Weise automatisch an die Erntegutmengen angepasst werden, wodurch der Erntegutdurchsatz erhöht und/oder vergleichmäßigt wird. Die Leitschnecke ist insbesondere bei voluminösem Erntegut, wie zum Beispiel Raps, vorteilhaft.

Die vorliegende Erfindung wird nachstehend anhand von in den Zeichnungen dargestellten Ausführungsbeispielen näher erläutert. Es zeigen:
- Fig. 1: eine perspektivische Ansicht eines Mähdreschers mit einem Bandschneidwerk;
- Fig. 2: eine perspektivische Ansicht eines Ausschnitts des Bandschneidwerks mit Schrägförderer aus Figur 1; und zwar in (a) eine Frontansicht und in (b) eine Rückansicht des Bandschneidwerks;
- Fig. 3: Schematische Darstellung einer Steuerungen in Abhängigkeit der Vorfahrtsgeschwindigkeit und zwar in (a) eine Steuerung des Mittenbandes und der Querförderbänder, und in (b) eine Steuerung der Einzugswalze und der Leitschnecke.

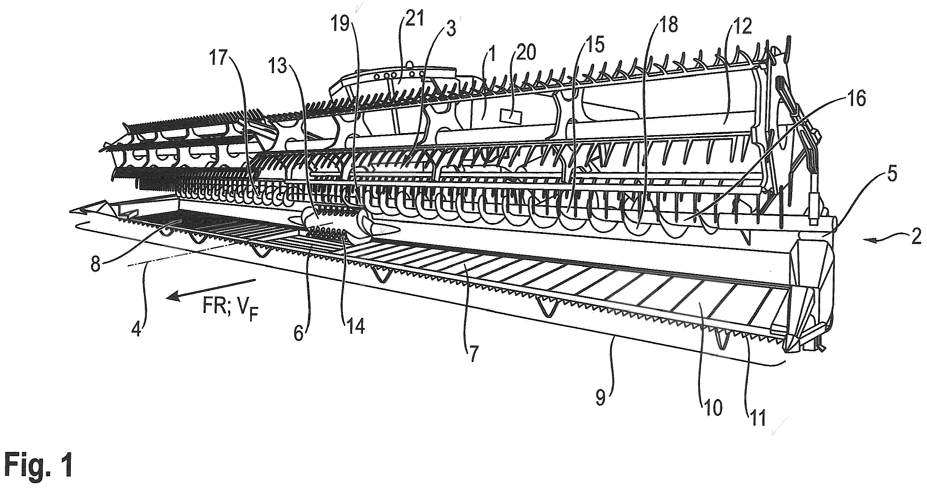

Figur 1 zeigt eine schematische perspektivische Ansicht eines Mähdreschers 1 mit einem Bandschneidwerk 2.

Das Bandschneidwerk 2 ist an einem Schrägförderers 3 des Mähdreschers 1 frontseitig am Mähdrescher 1 angeordnet, insbesondere montiert. Das Bandschneidwerk 2 weist eine Längsachse 4 auf, die sich mittig und parallel zu einer Fahrtrichtung FR erstreckt. Zudem weist das Bandschneidwerk 2 einen Rahmen 5 auf. Das Bandschneidwerk 2 weist ein mittig angeordnetes Mittenband 6 und jeweils ein linksseitig und ein rechtsseitig des Mittenbands 6 benachbart angeordnetes Querförderband 7,8 auf. Alternativ ist es denkbar, dass anstelle des einen Mittenbandes 6 mehrere Mittenbänder 6 und/oder anstelle des einen linksseitigen und des einen rechtsseitigen Querförderbandes 7,8 mehrere linksseitige und mehrere rechtsseitige Querförderbänder 7,8 im Bandschneidwerks 2 angeordnet sind. Das Mittenband 6 und die Querförderbänder 7,8 sind derart angeordnet, dass sie sich zusammen im Wesentlichen über eine gesamte Breite 9 des Bandschneidwerks 2 erstrecken. Das Mittenband 6 und die Querförderbänder 7,8 umfassen jeweils ein Endlosband 10.

Entgegen der Fahrtrichtung FR vor dem Mittenband 6 und den Querförderbändern 7,8 ist ein durchgehender, vorzugsweise flexibler, Messerbalken 11 angeordnet. Weiterhin ist am Rahmen 5 des Bandschneidwerks 2 eine schwenkbare Haspel 12 angeordnet. Der Messerbalken 11 und die Haspel 12 erstrecken sich dabei im Wesentlichen über die Breite 9 des Bandschneidwerks 2. Im rückwertigen Bereich des Mittenbandes 6 ist diesem oberseitig und im Wesentlichen sich über eine Breite des Mittenbands 6 erstreckend eine Einzugswalze 13 mit Fingerelementen 14 angeordnet. Alternativ kann die Einzugswalze 13 zum Beispiel auch als Einzugsschnecke mit Schneckenwindungen ausgebildet sein. Hinter der Einzugswalze 13 ist ein Einzugskanal 19 des Schrägförderers 3 des Mähdreschers 1 angeordnet. Weiterhin oberhalb des Mittenbandes 6, der Querförderbänder 7,8 und der Einzugswalze 13 und im Wesentlichen über die Breite 9 des Bandschneidwerks 2 quer zur Fahrtrichtung FR erstreckt sich eine Leitschnecke 15. Die Leitschnecke 15 weist zwei Walzen 16,17 mit gegenläufigen Schneckenwindungen 18 auf.

Der Mähdrescher 1 weist zudem eine in Fig. 1 nur schematisch angedeutete und später noch näher zu beschreibende Steuereinheit 20 zur Steuerung unter anderem des Bandschneidwerks 2 auf. Die Steuereinheit 20 steuert den Messerbalken 11, die Einzugswalze 13, die Leitschnecke 15 und insbesondere das Mittenband 6 und die Querförderbänder 7,8 des Bandschneidwerks 2. Die Steuereinheit 20 kann alternativ in einer zentralen Regel- und Steuereinheit im Mähdrescher 1 integriert sein. Ebenfalls kann in einer alternativen Ausgestaltung die Steuereinheit 20 dem Bandschneidwerk 2 zugeordnet sein oder die Steuerung zwischen mehreren Steuereinheiten 20 aufgeteilt sein. Frontseitig weist der Mähdrescher 1 eine Fahrerkabine 21 auf.

Der Mähdrescher 1 mit dem Bandschneidwerk 2 weist im Erntebetrieb eine Vorfahrt in Fahrtrichtung FR mit einer Vorfahrtsgeschwindigkeit v_{F} auf. Die Haspel 12 führt das Erntegut dem Messerbalken 11 zu, der das Erntegut abtrennt. Das abgetrennte Erntegut wird durch die Vorfahrt des Mähdreschers 1 und mittels der Haspel 12 dem Mittenband 6 und den Querförderbändern 7,8 zugeführt. Die Querförderbänder 7,8 fördern das Erntegut quer zur Längsachse 4 des Bandschneidwerks 2 zum Mittenband 6. Dabei wird die Förderung zum Mittenband 6 quer zur Längsachse 4 mittels der Leitschnecke 15 unterstützt. Zudem verdichtet die Leitschnecke 15 voluminöses Erntegut. Alternativ ist auch ein Bandschneidwerk 2 ohne die Leitschnecke 15 denkbar, insbesondere zum Einsatz bei kompaktem Erntegut oder geringen Erntegutmengen. Das Mittenband 6 ist unterhalb der Querförderbänder 7,8 angeordnet, sodass Erntegut beim Fördern von den Querförderbändern 7,8 auf das Mittenband 6 fällt. Das Mittenband 6 fördert das Erntegut zur Einzugswalze 13. Diese erfasst das Erntegut, verdichtet es und transportiert es in den Einzugskanal 19 des Schrägförderers 3. Das Erntegut wird dann durch den Schrägförderer 3 zum Dreschwerk (nicht dargestellt) des Mähdreschers 1 gefördert, wo es weiter verarbeitet wird.

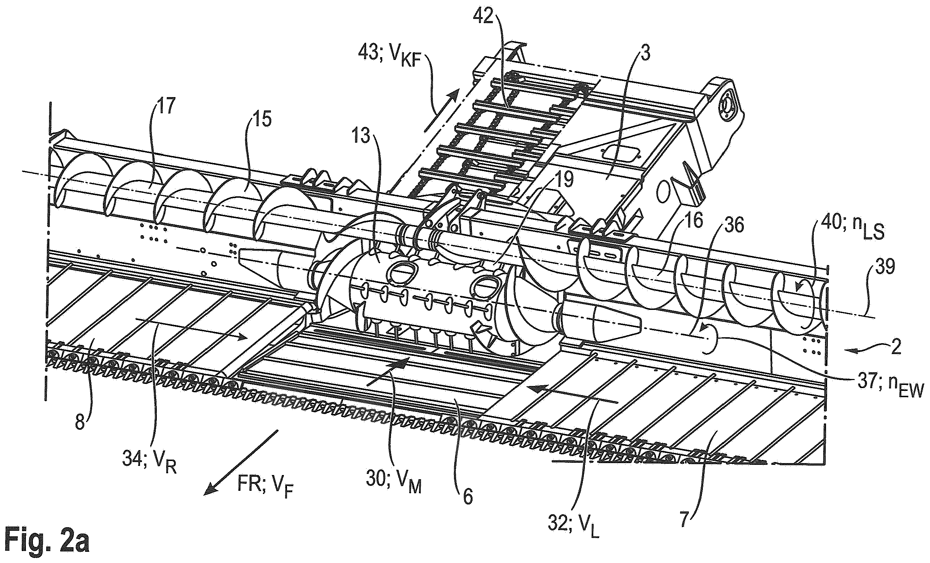

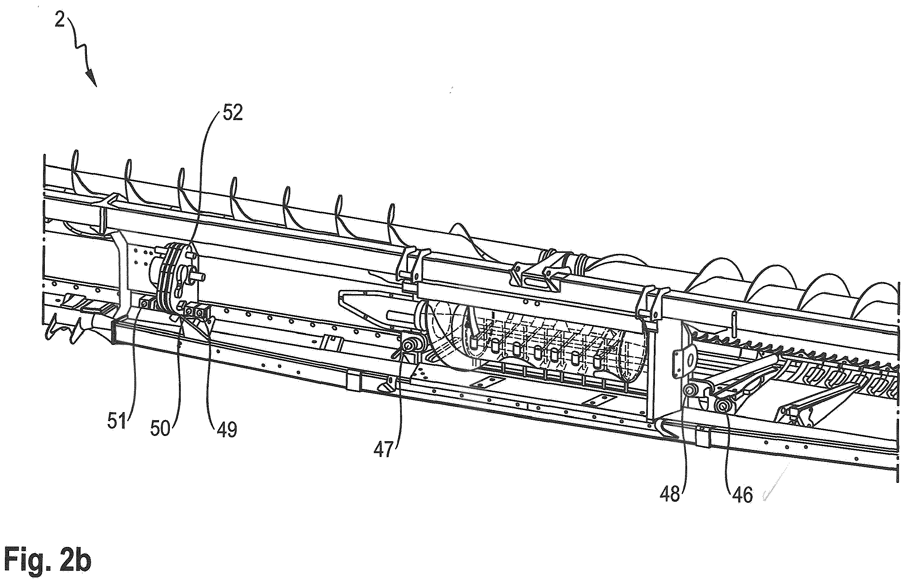

Figur 2 zeigt eine perspektivische Ansicht eines Ausschnitts des Bandschneidwerks 2 aus Figur 1 und zwar in (a) eine Frontansicht mit einem teils freigeschnittenen Schrägförderer 3 des Mähdreschers 1 und in (b) eine Rückansicht des Bandschneidwerks 2, wobei zur besseren Darstellung Teile des Rahmens 5 nicht dargestellt sind. Zudem zeigt Figur 1(a) Drehrichtungen 37,40 und Förderrichtungen 30-32,43 bei Förderung des Erntegutes zum Mähdrescher 1 im standardmäßigen Erntebetrieb. Das Mittenband 6 weist eine erste Förderrichtung 30 mit einer ersten Bandgeschwindigkeit v_{M} auf. Die Förderrichtung 30 des Mittenbandes 6 ist in diesem Ausführungsbeispiel parallel und entgegengesetzt zur Fahrtrichtung FR. Wesentlich ist hier, dass die Förderrichtung 30 des Mittenbandes 6 in Richtung des Einzugskanals 19 weist. Des Weiteren weist das linksseitige Querförderband 7 eine zweite Förderrichtung 32 mit einer zweiten Bandgeschwindigkeit v_{L} auf. Dabei ist die Förderrichtung 32 des linksseitigen Querförderbandes 7 quer zur Fahrtrichtung FR. Wesentlich ist hier, dass die Förderrichtung 32 des linksseitigen Querförderbandes 7 in Richtung des Mittenbandes 6 weist. Des Weiteren weist das rechtsseitige Querförderband 8 eine dritte Förderrichtung 34 mit einer dritten Bandgeschwindigkeit v_{R} auf. Dabei ist die Förderrichtung 34 des rechtsseitigen Querförderbandes 8 ebenfalls quer zur Fahrtrichtung FR. Wesentlich ist hier, dass die Förderrichtung 34 des rechtsseitigen Querförderbandes 8 ebenfalls in Richtung des Mittenbandes 6 weist. Im hier aufgeführten Ausführungsbeispiel sind die Förderrichtungen 32,34 beider Querförderbänder 7,8 zueinander entgegengesetzt. Die Einzugswalze 13 weist eine Drehachse 36 mit einer Drehrichtung 37 und einer Drehzahl n_{EW} der Einzugswalze 13 auf. Die Leitschnecke 15 weist eine weitere Drehachse 39 mit einer Drehrichtung 40 und einer Drehzahl n_{LS} auf. Der Schrägförderer 3 weist einen Kettenförderer 42 mit einer Förderrichtung 43 und einer Fördergeschwindigkeit V_{KF} zum Fördern vom Erntegut durch den Schrägförderer 3 auf.

Das Mittenband 6 und die beiden Querförderbänder 7,8 werden jeweils mittels eines Aktors, insbesondere jeweils mittels eines Hydromotors 46,47,48 angetrieben (siehe Figur 2(b)). Alternativ können die Aktoren auch als Elektromotoren oder als mechanische Ankoppelungen an einen Verbrennungsmotor, zum Beispiel mittels Getrieben oder Antriebsriemen, ausgebildet sein. Dem Hydromotor 46 des Mittenbandes 6 ist eine erste Hydropumpe 49 am Bandschneidwerk 2 zugeordnet. Dem Hydromotor 47 des linksseitigen Querförderbandes 7 ist eine zweite Hydropumpe 50 zugeordnet. Des Weiteren ist dem Hydromotor 48 des rechtsseitigen Querförderbandes 8 eine dritte Hydropumpe 51 zugeordnet. Dadurch sind das Mittenband 6 und die Querförderbänder 7,8 auf eine einfache Weise separat steuerbar. In einer alternativen Ausgestaltungsform wird beiden Hydromotoren 47,48 der Querförderbänder 7,8 eine gemeinsame Hydropumpe zugeordnet. Dies ist insbesondere bei einer Ausgestaltungsform von Vorteil, bei der beide Querförderbänder 7,8 mit identischen Bandgeschwindigkeiten v_{L},v_{R} angetrieben werden. Die Hydropumpen 49-51 werden mittels eines Getriebes 52 des Bandschneidwerks 2 angetrieben. Die Einzugswalze 13 wird bevorzugt mechanisch über das Getriebe 52 des Bandschneidwerks 2 angetrieben und in der Drehzahl 36 gesteuert. Der Kettenförderer 42 des Schrägförderers 3 wird bevorzugt mechanisch mittels Keilriemen angetrieben und mittels eines Variators (nicht dargestellt) gesteuert.

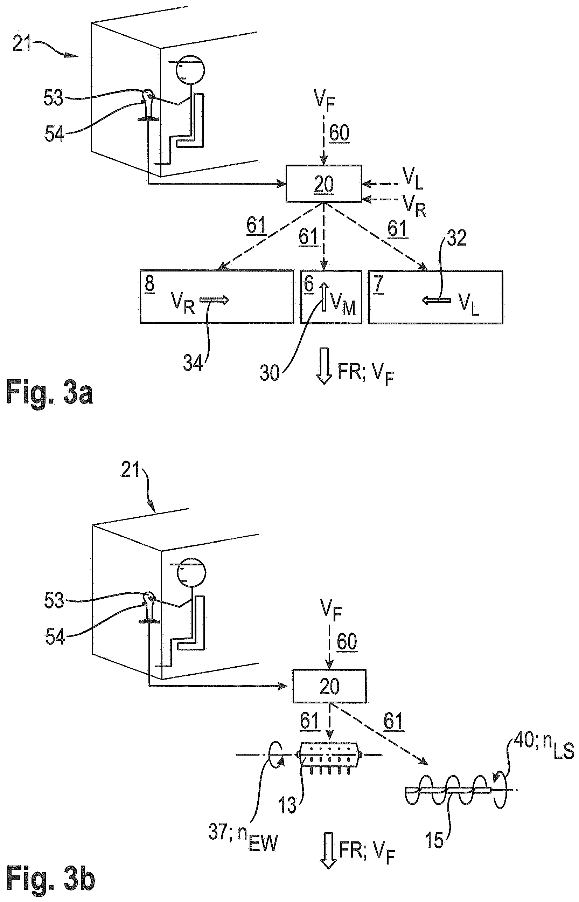

Figur 3a zeigt die erfindungsgemäße Steuerung des Mittenbandes 6 und der Querförderbänder 7,8 und einen Multifunktionsgriff 53 in der Fahrerkabine 21. Die Steuereinheit 20 steuert in einer ersten Ausgestaltung die Bandgeschwindigkeiten v_{M},v_{L},v_{R} des Mittenbandes 6 und des linksseitigen und rechtsseitigen Querförderbandes 7,8 automatisch in Abhängigkeit von der Vorfahrtsgeschwindigkeit v_{F} in der Weise, dass die Bandgeschwindigkeiten v_{M},v_{L},v_{R} des Mittenbandes 6 und der Querförderbänder 7,8 an die Vorfahrtgeschwindigkeit v_{F} angepasst werden. Dazu wird die Vorfahrtsgeschwindigkeit v_{F} überwacht und aus ihr werden individuelle Bandgeschwindigkeiten v_{M},v_{L},v_{R} für das Mittenband 6, das linksseitige Querförderband 7 und das rechtsseitige Querförderband 8 berechnet. Es liegt weiterhin im Rahmen der Erfindung, dass die Steuereinheit 20 in einer zweiten, zusätzlichen oder alternativen, Ausgestaltung die Bandgeschwindigkeiten v_{L},v_{R} des linksseitigen und rechtsseitigen Querförderbandes 7,8 automatisch in Abhängigkeit von der Vorfahrtsgeschwindigkeit v_{F}, und die Bandgeschwindigkeit v_{M} des Mittenbandes 6 automatisch in Abhängigkeit von den Bandgeschwindigkeiten v_{L},v_{R} des linksseitigen und rechtsseitigen Querförderbandes 7,8 steuert. Dabei werden die Bandgeschwindigkeiten v_{L},v_{R} der Querförderbänder 7,8 an die Vorfahrtsgeschwindigkeit v_{F} und die Bandgeschwindigkeit v_{M} des Mittenbandes 6 an die Bandgeschwindigkeiten v_{L},v_{R} der Querförderbänder 7,8 angepasst. Somit besteht hier für das Mittenband 6 nur eine indirekte Abhängigkeit von der Vorfahrtsgeschwindigkeit v_{F}. In analoger Weise zur ersten Ausgestaltung werden hier die Vorfahrtsgeschwindigkeit v_{F} und die Bandgeschwindigkeiten v_{L},v_{R} überwacht und daraus individuelle Bandgeschwindigkeiten v_{M},v_{L},v_{R} für das Mittenband 6, das linksseitige Querförderband 7 und das rechtsseitige Querförderband 8 berechnet.

Technisch wird die erfindungsgemäße Steuerung des Mittenbandes 6 und der Querförderbänder 7,8 in der ersten Ausgestaltung umgesetzt, indem die Steuereinheit 20 Messsignale 60 umfassend Informationen zur aktuellen Vorfahrtsgeschwindigkeit v_{F} empfängt, beispielsweise von einem Fahrzeuggeschwindigkeitssensor. In der zweiten Ausgestaltung empfängt die Steuereinheit 20 zudem Messsignale 60 umfassend Informationen zu den Bandgeschwindigkeiten v_{L},v_{R} des linksseitigen und des rechtsseitigen Querförderbandes 7,8, beispielsweise von Drehzahlsensoren. In der ersten Ausgestaltung berechnet die Steuereinheit 20 aus der Vorfahrtsgeschwindigkeit v_{F} die Bandgeschwindigkeiten v_{L},v_{R} des linksseitigen und des rechtsseitigen Querförderbandes 7,8 und die Bandgeschwindigkeit v_{M} des Mittenbandes 6. In der zweiten Ausgestaltung berechnet die Steuereinheit 20 aus der Vorfahrtsgeschwindigkeit v_{F} die Bandgeschwindigkeiten v_{L},v_{R} des linksseitigen und des rechtsseitigen Querförderbandes 7,8 und die Bandgeschwindigkeit v_{M} des Mittenbandes 6 aus den Bandgeschwindigkeiten v_{L},v_{R} des linksseitigen und des rechtsseitigen Querförderbandes 7,8. Die Bandgeschwindigkeiten v_{M},v_{L},v_{R} können bei beiden Ausgestaltungen identisch oder verschieden zueinander sein. Anschließend sendet die Steuereinheit 20 Steuersignale 61 an das Mittenband 6 und an die Querförderbänder 7,8. Die Steuersignale 61 werden von den Hydropumpen 49-51 empfangen und ändern Motordrehzahlen der Hydromotoren 46-48 des Mittenbandes 6 und der Querförderbänder 7,8 (siehe auch Figur 2b). Dadurch werden die Bandgeschwindigkeiten v_{M},v_{L},v_{R} eingestellt. Indem dem Mittenband 6 und den Querförderbändern 7,8 vorzugsweise jeweils eigene Hydromotoren 46,48 und Hydropumpen 49-51 zugeordnet sind, können das Mittenband 6, das linksseitige Querförderband 7 und das rechtsseitige Querförderband 8 mit jeweils unterschiedlichen Bandgeschwindigkeiten v_{M},v_{L},v_{R} betrieben werden.

Vorzugsweise verwendet die Steuereinheit 20 für die Berechnungen hinterlegte Wichtungsparameter und/oder Algorithmen. Bevorzugt sind die Wichtungsparameter linear, sodass eine anteilige Änderung der Vorfahrtsgeschwindigkeit v_{F} zu der gleichen anteiligen Änderung der Bandgeschwindigkeiten v_{M},v_{L},v_{R} führt.

Es ist denkbar, dass zur Überprüfung der eingestellten Bandgeschwindigkeiten v_{M},v_{L},v_{R} oder zur Steuerung weiterer Komponenten des Bandschneidwerks 2, wie zum Beispiel der Leitschnecke 15, in einer weiteren Ausgestaltung sämtliche Bandgeschwindigkeiten v_{M},v_{L},v_{R} gemessen und als Messsignale 60 an die Steuereinheit 20 gesandt und von ihr verarbeitet werden. Zudem ist es denkbar, dass die Drehzahlen n_{LS},n_{EW} der Leitschnecke 15, der Einzugswalze 13 und/oder die Fördergeschwindigkeit v_{KF} des Kettenförderers 42 des Schrägförderers 3 als Messsignale 60 an die Steuereinheit 20 gesandt und von ihr verarbeitet werden.

In einer bevorzugten Ausgestaltung sind die Bandgeschwindigkeiten v_{L},v_{R} des linksseitigen und des rechtsseitigen Querförderbandes 7,8 und/oder die Bandgeschwindigkeit v_{M} des Mittenbands 6 an die Vorfahrtsgeschwindigkeit v_{F} in der Weise gekoppelt, dass durch ein Erhöhen der Vorfahrtsgeschwindigkeit v_{F} die Bandgeschwindigkeiten v_{M},v_{L},v_{R} des linksseitigen und des rechtsseitigen Querförderbandes 7,8 sowie des Mittenbandes 6 erhöht werden. Durch ein Absenken der Vorfahrtsgeschwindigkeit v_{F} werden die Bandgeschwindigkeiten v_{M},v_{L},v_{R} des linksseitigen und rechtsseitigen Querförderbandes 7,8 sowie des Mittenbandes 6 abgesenkt. Alternativ sind lediglich die Bandgeschwindigkeiten des linksseitigen und des rechtsseitigen Querförderbandes 7,8 in dieser Weise an die Vorfahrtsgeschwindigkeit v_{F} gekoppelt. Vorzugsweise sind die Bandgeschwindigkeiten v_{L},v_{R} der Querförderbänder 7,8 bei Kopplung an die Vorfahrtsgeschwindigkeit v_{F} vorzugsweise bis zu zwei km/h höher oder niedriger als die Vorfahrtsgeschwindigkeit v_{F}. Des Weiteren ist die Bandgeschwindigkeit v_{M} des Mittenbandes 6 bei Kopplung an die Vorfahrtsgeschwindigkeit v_{F} bis zu zwei km/h höher als die Vorfahrtsgeschwindigkeit v_{F}.

In einer weiteren bevorzugten Ausführungsform ist die Bandgeschwindigkeit v_{M} des Mittenbands 6 an die Bandgeschwindigkeiten v_{L},v_{R} zumindest des linksseitigen und/oder des rechtsseitigen Querförderbandes 7,8 gekoppelt. Dabei wird vorzugsweise ein konstantes Verhältnis der Bandgeschwindigkeit v_{M} des Mittenbandes 6 zumindest zu einer der Bandgeschwindigkeiten v_{L},v_{R} der beide Querförderbänder 7,8 festgelegt. Vorzugsweise berechnet die Steuereinheit 20 dazu die Bandgeschwindigkeit v_{M} des Mittenbandes 6 aus den Bandgeschwindigkeiten v_{L},v_{R} beider Querförderbänder 7,8, wenn beide Bandgeschwindigkeiten v_{L},v_{R} identisch sind. Werden die Bandgeschwindigkeiten v_{L},v_{R} der Querförderbänder 7,8 erhöht, so wird auch die Bandgeschwindigkeit v_{M} des Mittenbandes 6 erhöht, insbesondere um einen gleichen Faktor. Werden die Bandgeschwindigkeiten v_{L},v_{R} der Querförderbänder 7,8 gesenkt, so wird auch die Bandgeschwindigkeit v_{M} des Mittenbandes 6 gesenkt, insbesondere um einen gleichen Faktor. Weiterhin bevorzugt berechnet die Steuereinheit 20 die Bandgeschwindigkeit v_{M} des Mittenbandes 6 aus der Bandgeschwindigkeit v_{L},v_{R} des linksseitigen oder des rechtsseitigen Querförderbandes 7,8, wenn sich die Bandgeschwindigkeiten v_{L},v_{R} des linksseitigen und des rechtsseitigen Querförderbandes 7,8 unterscheiden. Die Bandgeschwindigkeiten v_{L},v_{R} des linksseitigen und des rechtsseitigen Querförderbandes 7,8 unterscheiden sich insbesondere bei Hangneigung und wenn eine neigungsabhängige Steuerung der Bandgeschwindigkeiten v_{L},v_{R} der Querförderbänder 7,8 vorliegt. Bevorzugt wird die Bandgeschwindigkeit v_{M} des Mittenbandes 6 dabei an die Bandgeschwindigkeit v_{L},v_{R} eines bergabfördernden Querförderbandes 7,8 gekoppelt. Wird die Bandgeschwindigkeit v_{L},v_{R} des bergabfördernden Querförderbandes 7,8 erhöht, so wird auch die Bandgeschwindigkeit v_{M} des Mittenbandes 6 erhöht, insbesondere um einen gleichen Faktor. Werden die Bandgeschwindigkeiten v_{L},v_{R} der Querförderbänder 7,8 gesenkt, so wird auch die Bandgeschwindigkeit v_{M} des Mittenbandes 6 gesenkt, insbesondere um einen gleichen Faktor. Grundsätzlich ist das Prinzip auch auf das andere Querförderband 8,7 übertragbar.

In einer weiteren bevorzugten Ausgestaltung sind die Bandgeschwindigkeit v_{M} des Mittenbandes 6, die Bandgeschwindigkeit v_{L} des linksseitigen Querförderbandes 7 und/oder die Bandgeschwindigkeit v_{R} des rechtsseitigen Querförderbandes 8 erntegutartspezifisch an die Vorfahrtsgeschwindigkeit v_{F} gekoppelt. Dazu werden vorzugsweise erntegutartspezifische Wichtungsparameter, wie etwa Wichtungsparameter für Weizen oder Wichtungsparameter für Raps, bei der Berechnung der Bandgeschwindigkeiten v_{M},v_{L},v_{R} von der Steuereinheit 20 verwendet. Die Erntegutart wird vorzugsweise vom Fahrzeugführer zuvor ausgewählt. Bevorzugt werden die Bandgeschwindigkeiten v_{M},v_{L},v_{R} in einem gleichen Verhältnis zueinander an das Erntegut angepasst. Insbesondere stellt die Steuereinheit 20 dabei bei Getreide höhere Bandgeschwindigkeiten v_{M},v_{L},v_{R} und bei Raps niedrigere Bandgeschwindigkeiten v_{M},v_{L},v_{R} ein.

Für das Mittenband 6 und die Querförderbänder 7,8 sind im hier gezeigten Ausführungsbeispiel vorzugsweise eine minimale Bandgeschwindigkeit v_{M},v_{L},v_{R} und eine maximalen Bandgeschwindigkeit v_{M},v_{L},v_{R} einstellbar. Die Werte für die minimale Bandgeschwindigkeit v_{M},v_{L},v_{R} und die maximale Bandgeschwindigkeit v_{M},v_{L},v_{R} sind vorzugsweise unabhängig von der Vorfahrtsgeschwindigkeit v_{F}. Sie begrenzen einen einstellbaren Bereich für die Bandgeschwindigkeiten v_{M},v_{L},v_{R} des Mittenbandes 6 und der Querförderbänder 7,8 ein. Die Steuereinheit 20 kann die minimale Bandgeschwindigkeit v_{M},v_{L},v_{R} nicht unterschreiten und die maximale Bandgeschwindigkeit v_{M},v_{L},v_{R} nicht überschreiten. Sie sind vorzugsweise vom Fahrzeugführer einstellbar. Alternativ ist auch eine werksseitige Voreinstellung denkbar. Bevorzugt sind die minimale und/oder die maximale Bandgeschwindigkeit v_{M},v_{L},v_{R} erntegutartspezifisch.

Vorzugsweise weist das Mittenband 6 zudem eine höhere Bandgeschwindigkeit v_{M} als die Querförderbänder 7,8 auf. Insbesondere ist die Bandgeschwindigkeit v_{M} des Mittenbandes 6 derart eingestellt, dass es zu keiner Anstauung von Erntegut auf dem Mittenband 6 kommt. Dazu müssen beide auf dem Mittenband 6 eingehende Volumenströme an Erntegut der beiden Querförderbändern 7,8 zusammen einem das Mittenband 6 verlassenden Erntegutstrom entsprechen. Dabei hängt die Höhe der Abweichung vorzugsweise von den Bandgeschwindigkeiten v_{L},v_{R} der Querförderbänder 7,8 ab.

In einer bevorzugten Ausgestaltung wird eine Hangneigung mittels an sich bekannter und nicht näher beschriebener Neigungssensoren, vorzugsweise am Bandschneidwerk 2 oder alternativ am Mähdrescher 1, gemessen. Bei einer Neigung von 0°oder im Wesentlichen von 0°, das heißt, wenn sich das Bandschneidwerk 2 in einem ebenen Gelände befindet, sind die Bandgeschwindigkeit v_{L},v_{R} des linksseitigen und des rechtsseitigen Querförderbandes 7,8 identisch. Bei einer Hangneigung ungleich 0°oder im Wesentlichen ungleich 0°ist eines der beiden Querförderbänder 7,8 ein bergaufförderndes Querförderband 7,8 und das andere Querförderband 8,7 ein bergabförderndes Querförderband 8,7. Die Steuereinheit 20 reduziert vorzugsweise die Bandgeschwindigkeit v_{R},v_{L} des bergabfördernden Querförderbandes 8,7 und erhöht die Bandgeschwindigkeit v_{L},v_{R} des bergauffördernden Querförderbandes 7,8 in Abhängigkeit von der Hangneigung des Bandschneidwerks 2. Vorzugsweise werden beide Bandgeschwindigkeiten v_{L},v_{R} dabei um den gleichen Betrag geändert. Alternativ wird nur eine der Bandgeschwindigkeiten v_{L},v_{R} verändert. In einer weiteren bevorzugten Ausgestaltung wird zudem die Bandgeschwindigkeit v_{M} des Mittenbandes 6 in Abhängigkeit von der Hangneigung erhöht, vorzugsweise um bis zu 20% der eingestellten Bandgeschwindigkeit v_{M} des Mittenbandes 6.

In einer weiteren bevorzugten Ausgestaltung werden bei einem Herausfahren aus einem Erntegutbestand, insbesondere in ein Vorgewende, die Bandgeschwindigkeit v_{M} des Mittenbandes 6 und die Bandgeschwindigkeiten v_{L},v_{R} der Querförderbänder 7,8 auf die minimale Bandgeschwindigkeit v_{M},v_{L},v_{R} abgesenkt. Das Herausfahren aus dem Erntegutbestand wird vorzugsweise von der Steuereinheit 20 erfasst. Dazu können vorzugsweise notwendige Daten aus einem Routenmanagement, einer GPS-basierten Feldkarte oder von Umfeldsensoren an die Steuereinheit 20 automatisch übermittelt werden und als Signal für die Ausfahrt aus dem Erntegutbestand von der Steuereinheit 20 verwendet werden. Vorzugsweise ist das Absenken der Bandgeschwindigkeiten v_{M} des Mittenbandes 6 und der Bandgeschwindigkeiten v_{L},v_{R} der Querförderbänder 7,8 auf die minimale Bandgeschwindigkeit v_{M},v_{L},v_{R} in ein Feldendemanagementsystem integriert. Alternativ oder zusätzlich kann das Herausfahren aus dem Erntegutbestand durch den Fahrzeugführer angegeben werden.

In einer weiteren bevorzugten Ausgestaltung ist zudem vorgesehen, dass die Bandgeschwindigkeiten v_{M},v_{L},v_{R} in dem Bereich zwischen der minimalen und der maximalen Bandgeschwindigkeit v_{M},v_{L},v_{R} manuell, das heißt vom Fahrzeugführer, einstellbar sind. Dabei werden die Bandgeschwindigkeiten v_{M},v_{L},v_{R} vorzugsweise aus einer Skala von 0% bis 100% ausgewählt, wobei die Prozentwerte vorzugsweise linear mit den Bandgeschwindigkeiten v_{M},v_{L},v_{R} verknüpft sind. Dabei ist 0% vorzugsweise die minimale Bandgeschwindigkeit v_{M},v_{L},v_{R} und 100% vorzugsweise die maximale Bandgeschwindigkeit v_{M},v_{L},v_{R}. Bevorzugt weist die Fahrerkabine 21 des Mähdreschers 1 ein Schaltelement (nicht dargestellt) zum Umstellen von einem automatischen Bandgeschwindigkeitsmodus mittels der Steuereinheit 20 zu einem manuellen Bandgeschwindigkeitsmodus auf.

Des Weiteren sind die Förderrichtungen 30,32,34 des Mittenbandes 6 und der Querförderbänder 7,8 umkehrbar, vorzugsweise mittels eines Schaltelements in der Fahrerkabine 21. Bevorzugt ist das Schaltelement an einem Multifunktionsgriff 53 angeordnet. Dazu steuert die Steuereinheit 20 auch die Förderrichtungen 30,32,34 des Mittenbandes 6 und der Querförderbänder 7,8. Bevorzugt empfängt die Steuereinheit 20 Messsignale 60 umfassend Informationen zu Motordrehrichtungen von den Hydromotoren 46-48. Die Hydromotoren 46-48 sind bevorzugt in zwei Motordrehrichtungen antreibbar. Die Hydropumpen 49-51 sind bevorzugt in einer Pumpenförderrichtung antreibbar. Zudem sind den Hydromotoren vorzugsweise Ventile zugeordnet. Beim Umkehren der Förderrichtungen 30,32,34 treiben im hier vorliegenden Ausführungsbeispiel die Hydropumpen 49-51 die Hydromotoren 46-48 des Mittenbandes 6 und der Querförderbänder 7,8, vorzugsweise durch eine Änderung von Ventilstellungen der Ventile, in einer umgekehrten Motordrehrichtung an.

Bevorzugt weist der Schrägförderer 3 einen Kettenförderer 42 auf und die Drehrichtung 37 der Einzugswalze 13 und/oder die Förderrichtung 43 des Kettenförderers 42 des Schrägförderers 3 und die Förderrichtung 30 des Mittenbandes 6 sind gemeinschaftlich umkehrbar. Dabei werden die Querförderbänder 7,8 bevorzugt gestoppt. Somit wird Erntegut insbesondere aus dem Einzugskanal 19 des Schrägförderers 3 in umgekehrter Richtung wieder heraus- und weg vom Einzugskanal 19 gefördert. Dazu steuert die Steuereinheit 20 zusätzlich die Drehrichtungen 37,39 der Einzugswalze 13 und der Leitschnecke 15. Des Weiteren steuert die Steuereinheit 20 vorzugsweise die Förderrichtung 43 des Kettenförderers 42 des Schrägförderers 3. Dafür sendet die Steuereinheit 20 Steuersignale 61 an die Einzugswalze 13, den Kettenförderers 42, das Mittenband und die Querförderbänder, insbesondere an dessen Aktoren wie zum Beispiel den Hydropumpen 49-51. Vorzugsweise erfolgt diese Umkehrung der Drehrichtung 37 und der Förderrichtungen 43,30 und das Stoppen der Querförderbänder 7,8 mittels eines Schaltelements in der Fahrerkabine 21. Das Schaltelement kann an dem Multifunktionsgriff 53 angeordnet sein.

Bevorzugt weist der Mähdrescher in der Fahrerkabine 21 einen Multifunktionsgriff 53 mit mindestens einem Schalter 54 zur Steuerung des Mittenbandes 6 und der Querförderbänder 7,8 auf. Der Schalter 54 weist vorzugsweise drei Schaltstellungen auf. In einer ersten Schaltstellung werden das Mittenband 6 und die Querförderbänder 7,8 reversiert. Das heißt, dass Ihre Förderrichtungen 30,32,34 umgekehrt werden. In einer zweiten Schaltstellung werden die Bandgeschwindigkeiten v_{M},v_{L},v_{R} des Mittenbandes 6 und der Querförderbänder 7,8 auf vorzugsweise 25% der eingestellten Bandgeschwindigkeiten v_{M},v_{L},v_{R} abgesenkt. Die dritte Schaltstellung ist eine neutrale Schaltstellung ohne Aktionsbelegung. Alternativ kann der Schalter 54 auch als ein Element eines elektronischen Terminals ausgebildet sein.

In einer bevorzugten zusätzlichen oder alternativen Ausgestaltungsform weist das Bandschneidwerk 2 hinter dem Mittenband 6 eine Einzugswalze 13 zum Einzug des Erntegutes in den Einzugskanal 19 und/oder mindestens eine Leitschnecke 15 zum Fördern von Erntegut zur Einzugswalze 13 und/oder zu dem Mittenband 6 auf (siehe auch Figur 1 und 2a), sowie die Steuereinheit 20, die dazu eingerichtet, die Drehzahl n_{EW} der Einzugswalze 13 und/oder die Drehzahl n_{LS} der Leitschnecke 15 in Abhängigkeit von der Vorfahrtsgeschwindigkeit v_{F} in der Weise zu steuern, dass die Drehzahlen n_{EV},n_{LS} der Einzugswalze 13 und/oder der Leitschnecke 15 an die Vorfahrtgeschwindigkeit v_{F} angepasst werden. Vorzugsweise werden beide Drehzahlen n_{EW},n_{LS} an die Vorfahrtgeschwindigkeit v_{F} angepasst. Dazu wird die Vorfahrtsgeschwindigkeit v_{F} überwacht und die Steuereinheit 20 berechnet aus ihr die Drehzahlen n_{EW},n_{LS} der Einzugswalze 13 und der Leitschnecke 15 und sendet Steuersignale 61 an die Einzugswalze 13 und die Leitschnecke 15, insbesondere deren Aktoren. Eine Erhöhung der Vorfahrtsgeschwindigkeit v_{F} führt dabei zu einer Erhöhung der Drehzahlen n_{EW},n_{LS} der Einzugswalze 13 und der Leitschnecke 15. Ein Absenken der Vorfahrtsgeschwindigkeit v_{F} führt dabei zu einem Absenken der Drehzahlen n_{EW},n_{LS} der Einzugswalze 13 und der Leitschnecke 15. Die detaillierte technische Steuerung erschließt sich dem Fachmann aus der vorangegangenen Beschreibung in analoger Weise.

### Bezugszeichenliste

- 1: Mähdrescher
- 2: Bandschneidwerk
- 3: Schrägförderer
- 4: Längsachse des Bandschneidwerks
- 5: Rahmen des Bandschneidwerks
- 6: Mittenband
- 7: Linksseitiges Querförderband
- 8: Rechtsseitiges Querförderband
- 9: Breite des Bandschneidwerks
- 10: Endlosband
- 11: Messerbalken
- 12: Haspel
- 13: Einzugswalze
- 14: Fingerelement der Einzugswalze
- 15: Leitschnecke
- 16: Erste Walze der Leitschnecke
- 17: Zweite Walze der Leitschnecke
- 18: Schneckenwindung der Leitschnecke
- 19: Einzugskanal des Schrägförderers
- 20: Steuereinheit
- 21: Fahrerkabine
- 30: Erste Förderrichtung des Mittenbandes
- 32: Zweite Förderrichtung des linksseitigen Querförderbandes
- 34: Dritte Förderrichtung des rechtsseitigen Querförderbandes
- 36: Drehachse der Einzugswalze
- 37: Drehrichtung der Einzugswalze
- 39: Drehachse der Leitschnecke
- 40: Drehrichtung der Leitschnecke
- 42: Kettenförderer des Schrägförderers
- 43: Förderrichtung des Kettenförderers des Schrägförderers
- 46: Hydromotor des Mittenbandes
- 47: Hydromotor des linksseitigen Querförderbandes
- 48: Hydromotor des rechtsseitigen Querförderbandes
- 49: Erste Hydropumpe des Mittebandes
- 50: Zweite Hydropumpe des linksseitigen Querförderbandes
- 51: Dritte Hydropumpe des rechtsseitigen Querförderbandes
- 52: Getriebe des Bandschneidwerks
- 53: Multifunktionsgriff
- 54: Schalter
- 60: Messsignale
- 61: Steuersignale
- FR: Fahrtrichtung
- v_{F}: Vorfahrtsgeschwindigkeit des Mähdreschers
- v_{M}: Erste Bandgeschwindigkeit des Mittenbandes
- v_{L}: Zweite Bandgeschwindigkeit des linksseitigen Querförderbandes
- v_{R}: Dritte Bandgeschwindigkeit des rechtsseitigen Querförderbandes
- n_{EW}: Drehzahl der Einzugswalze
- n_{LS}: Drehzahl der Leitschnecke
- v_{KF}: Fördergeschwindigkeit des Kettenförderers des Schrägförderers

## Patentansprüche

1. Mähdrescher (1) mit einem Bandschneidwerk (2),
das mindestens ein Mittenband (6) zur Förderung von Erntegut zu einer Einzugswalze (13) und/oder zu einem Einzugskanal (19) eines Schrägförderers (3),
und mindestens ein linksseitig und ein rechtsseitig zu dem Mittenband (6) angeordnetes Querförderband (7,8) zur Förderung des Erntegutes zum Mittenband (6) umfasst,
wobei das Mittenband (6), das linksseitige und das rechtsseitige Querförderband (7,8) in Fahrtrichtung (FR) hinter einem Messerbalken (11) angeordnet sind,
wobei das Mittenband (6), das linksseitige und das rechtsseitige Querförderband (7,8) jeweils mit einer individuellen Bandgeschwindigkeit (v_{M},v_{L},v_{R}) betreibbar sind,
wobei der Mähdrescher (1) und/oder das Bandschneidwerk (2) eine Steuereinheit (20) aufweist,
**dadurch gekennzeichnet, dass**
die Steuereinheit (20) dazu eingerichtet ist, die Bandgeschwindigkeiten (v_{L},v_{R}) des linksseitigen und des rechtsseitigen Querförderbandes (7,8) jeweils in Abhängigkeit von einer Vorfahrtsgeschwindigkeit (v_{F}), und die Bandgeschwindigkeit (v_{M}) des Mittenbandes (6) in Abhängigkeit von der Vorfahrtsgeschwindigkeit (v_{F}) oder in Abhängigkeit von der Bandgeschwindigkeit (v_{L},v_{R}) des linksseitigen und des rechtsseitigen Querförderbandes (7,8) automatisch zu steuern.

2. Mähdrescher (1) nach Anspruch 1,
**dadurch gekennzeichnet, dass**
die Bandgeschwindigkeiten (v_{L},v_{R}) des linksseitigen und des rechtsseitigen Querförderbandes (7,8) und/oder die Bandgeschwindigkeit (v_{M}) des Mittenbands (6) an die Vorfahrtsgeschwindigkeit (v_{F}) gekoppelt sind.

3. Mähdrescher (1) nach einem der vorhergehenden Ansprüche,
**dadurch gekennzeichnet, dass**
die Bandgeschwindigkeit (v_{M}) des Mittenbands (6) an die Bandgeschwindigkeiten (v_{L},v_{R}) zumindest des linksseitigen und/oder des rechtsseitigen Querförderbandes (7,8) gekoppelt ist.

4. Mähdrescher (1) nach einem der vorhergehenden Ansprüche,
**dadurch gekennzeichnet, dass**
die Bandgeschwindigkeit (v_{M}) des Mittenbandes (6), die Bandgeschwindigkeit (v_{L}) des linksseitigen Querförderbandes (7) und/oder die Bandgeschwindigkeit (v_{R}) des rechtsseitigen Querförderbandes (8) erntegutartspezifisch an die Vorfahrtsgeschwindigkeit (v_{F}) gekoppelt sind, insbesondere derart, dass bei Getreide höhere Bandgeschwindigkeiten (v_{M},v_{L},v_{R}) und bei Raps niedrigere Bandgeschwindigkeiten (v_{M},v_{L},v_{R}) eingestellt werden.

5. Mähdrescher (1) nach einem der vorhergehenden Ansprüche,
**dadurch gekennzeichnet, dass**
für das Mittenband (6), das linksseitige und das rechtsseitige Querförderband (7,8) eine minimale Bandgeschwindigkeit (v_{M},v_{L},v_{R}) und eine maximale Bandgeschwindigkeit (v_{M},v_{L},v_{R}) einstellbar sind.

6. Mähdrescher (1) nach einem der vorhergehenden Ansprüche,
**dadurch gekennzeichnet, dass**
das Mittenband (6) eine höhere Bandgeschwindigkeit (v_{M}) als das linksseitige und das rechtsseitige Querförderband (7,8) aufweist.

7. Mähdrescher (1) nach einem der vorhergehenden Ansprüche,
**dadurch gekennzeichnet, dass**
bei Hangneigung die Bandgeschwindigkeiten (v_{L},v_{R}) des linksseitigen und des rechtsseitigen Querförderbandes (7,8) in Abhängigkeit von der Hangneigung des Bandschneidwerks (2) und den Förderrichtungen (32,34) des linksseitigen und des rechtsseitigen Querförderbandes (7,8) gesteuert werden, insbesondere die Bandgeschwindigkeit (v_{L},v_{R}) des bergauffördernden Querförderbandes (7,8) erhöht und/oder die Bandgeschwindigkeit (v_{R},v_{L}) des bergabfördernden Querförderbandes (8,7) reduziert wird.

8. Mähdrescher (1) nach einem der vorhergehenden Ansprüche,
**dadurch gekennzeichnet, dass**
die Bandgeschwindigkeit (v_{M}) des Mittenbands (6) in Abhängigkeit der Hangneigung des Bandschneidwerks (2) regelbar ist.

9. Mähdrescher (1) nach einem der vorhergehenden Ansprüche,
**dadurch gekennzeichnet, dass**
beim Herausfahren aus einem Erntegutbestand die Bandgeschwindigkeiten (v_{M},v_{L},v_{R}) des Mittenbandes (6), des linksseitigen und des rechtsseitigen Querförderbandes (7,8) auf die minimale Bandgeschwindigkeit (v_{M},v_{L},v_{R}) absenkt werden.

10. Mähdrescher (1) nach einem der vorhergehenden Ansprüche,
**dadurch gekennzeichnet, dass**
die Bandgeschwindigkeiten (v_{L},v_{R}) des linksseitigen und des rechtsseitigen Querförderbandes (7,8) und die Bandgeschwindigkeit (v_{M}) des Mittenbands (6) in einem Bereich zwischen der minimale Bandgeschwindigkeit (v_{M},v_{L},v_{R}) und der maximalen Bandgeschwindigkeit (v_{M},v_{L},v_{R}) manuell einstellbar sind.

11. Mähdrescher (1) nach einem der vorhergehenden Ansprüche,
**dadurch gekennzeichnet, dass**
die Förderrichtungen (30,32,34) des Mittenbandes (6), des linksseitigen und des rechtsseitigen Querförderbandes (7,8) umkehrbar sind.

12. Mähdrescher (1) nach einem der vorhergehenden Ansprüche,
**dadurch gekennzeichnet, dass**
der Schrägförderer (3) einen Kettenförderer (42) aufweist und dass eine Drehrichtung (37) der Einzugswalze (13) und/oder eine Förderrichtung (43) eines Kettenförderers (42) des Schrägförderers (3) und die Förderrichtung (30) des Mittenbands (6) gemeinschaftlich umkehrbar ist, und das linksseitige und das rechtsseitige Querförderband (7,8) stoppbar sind.

13. Mähdrescher (1) nach einem der vorhergehenden Ansprüche,
**dadurch gekennzeichnet, dass**
der Mähdrescher (1) in einer Fahrerkabine (21) einen Multifunktionsgriff (53) mit einem Schalter (54) aufweist, wobei der Schalter (54) in einer ersten Schaltstellung das Mittenband (6), das linksseitige und das rechtsseitige Querförderband (7,8) reversiert und in einer zweiten Schaltstellung die Bandgeschwindigkeiten (v_{M},v_{L},v_{R}) des Mittenbandes (6), des linksseitigen und des rechtsseitigen Querförderbandes (7,8) auf einen festgelegten Wert abgesenkt, insbesondere auf 25% der eingestellten Bandgeschwindigkeiten (v_{M},v_{L},v_{R}).

14. Mähdrescher (1) nach einem der vorhergehenden Ansprüche, **dadurch gekennzeichnet, dass**
das Bandschneidwerk (2) hinter dem Mittenband (6) eine Einzugswalze (13) zum Einzug des Erntegutes in den Einzugskanal (19) aufweist, und/oder mindestens eine Leitschnecke (15) zum Fördern von Erntegut zur Einzugswalze (13) und/oder zu dem Mittenband (6) aufweist, und dass die Steuereinheit (20) dazu eingerichtet ist, eine Drehzahl (n_{EW}) der Einzugswalze (13) und/oder die Drehzahl (n_{LS}) der Leitschnecke (15) in Abhängigkeit von der Vorfahrtsgeschwindigkeit (v_{F}) zu steuern.

## Claims

1. A combine harvester (1) having a belt cutting assembly (2) which comprises at least one central belt (6) for conveying crop to an intake roller (13) and/or to an intake channel (19) of an inclined conveyor (3), and at least one transverse conveyor belt (7, 8) disposed on the left hand side and on the right hand side of the central belt (6) for conveying the crop to the central belt (6), wherein the central belt (6), the left hand side and the right hand side transverse conveyor belt (7, 8) are disposed behind a cutter bar (11) in the direction of travel (FR), wherein the central belt (6), the left hand side and the right hand side transverse conveyor belt (7, 8) can respectively be operated at an individual belt speed (v_{M}, v_{L}, v_{R}), wherein the combine harvester (1) and/or the belt cutting assembly (2) has a control unit (20),
**characterized in that**
the control unit (20) is configured for automatically controlling the belt speeds (v_{L}, v_{R}) of the left hand side and of the right hand side transverse conveyor belt (7, 8) in each case as a function of a forward travel speed (v_{F}), and for automatically controlling the belt speed (v_{M}) of the central belt (6) as a function of the forward travel speed (v_{F}) or as a function of the belt speed (v_{L}, v_{R}) of the left hand side and of the right hand side transverse conveyor belt (7, 8).

2. The combine harvester (1) according to claim 1, **characterized in that**
the belt speeds (v_{L}, v_{R}) of the left hand side and of the right hand side transverse conveyor belt (7, 8) and/or the belt speed (v_{M}) of the central belt (6) are coupled to the forward travel speed (v_{F}).

3. The combine harvester (1) according to one of the preceding claims, **characterized in that**
the belt speed (v_{M}) of the central belt (6) is coupled to the belt speeds (v_{L}, v_{R}) of at least the left hand side and/or the right hand side transverse conveyor belt (7, 8).

4. The combine harvester (1) according to one of the preceding claims, **characterized in that**
the belt speed (v_{M}) of the central belt (6), the belt speed (v_{L}) of the left hand side transverse conveyor (7) and/or the belt speed (v_{R}) of the right hand side transverse conveyor (8) are coupled to the forward travel speed (v_{F}) in a manner which is specific to the type of crop, in particular in a manner such that with grain, higher belt speeds (v_{M}, v_{L}, v_{R}) are employed and with rape, lower belt speeds (v_{M}, v_{L}, v_{R}) are employed.

5. The combine harvester (1) according to one of the preceding claims, **characterized in that**
a minimum belt speed (v_{M}, v_{L}, v_{R}) and a maximum belt speed (v_{M}, v_{L}, v_{R}) can be set for the central belt (6), the left hand side and the right hand side transverse conveyor belt (7, 8).

6. The combine harvester (1) according to one of the preceding claims, **characterized in that**
the central belt (6) has a higher belt speed (v_{M}) than the left hand side and the right hand side transverse belt (7, 8).

7. The combine harvester (1) according to one of the preceding claims, **characterized in that**
when on a gradient, the belt speeds (v_{L}, v_{R}) of the left hand side and of the right hand side transverse conveyor belt (7, 8) are controlled as a function of the gradient of the belt cutting assembly (2) and the conveyor devices (32, 34) of the left hand side and of the right hand side transverse conveyor belt (7, 8), in particular the belt speed (v_{L}, v_{R}) of the transverse conveyor belt (7, 8) which is conveying up the gradient is raised and/or the belt speed (v_{R}, v_{L}) of the transverse conveyor belt (8, 7) which is conveying down the gradient is reduced.

8. The combine harvester (1) according to one of the preceding claims, **characterized in that**
the belt speed (v_{M}) of the central belt (6) can be controlled as a function of the gradient of the belt cutting assembly (2).

9. The combine harvester (1) according to one of the preceding claims, **characterized in that**
when driving out of a field crop, the belt speeds (v_{M}, v_{L}, v_{R}) of the central belt (6), of the left hand side and of the right hand side transverse conveyor belt (7, 8) are reduced to the minimum belt speed (v_{M}, v_{L}, v_{R}).

10. The combine harvester (1) according to one of the preceding claims, **characterized in that**
the belt speeds (v_{L}, v_{R}) of the left hand side and of the right hand side transverse conveyor belt (7, 8) and the belt speed (v_{M}) of the central belt (6) can be adjusted manually in a range between the minimum belt speed (v_{M}, v_{L}, v_{R}) and the maximum belt speed (v_{M}, v_{L}, v_{R}).

11. The combine harvester (1) according to one of the preceding claims, **characterized in that**
the conveying directions (30, 32, 34) of the central belt (6), of the left hand side and of the right hand side transverse conveyor belt (7, 8) can be reversed.

12. The combine harvester (1) according to one of the preceding claims, **characterized in that**
the inclined conveyor (3) has a chain conveyor (42) and **in that** a direction of rotation (37) of the intake roller (13) and/or a conveying direction (43) of a chain conveyor (42) of the inclined conveyor (3) and the conveying direction (30) of the central belt (6) can jointly be reversed, and the left hand side and the right hand side transverse conveyor belt (7, 8) can be stopped.

13. The combine harvester (1) according to one of the preceding claims, **characterized in that**
in a driver's cabin (21), the combine harvester (1) has a multi-functional handle (53) with a switch (54), wherein in a first switch position, the switch (54) reverses the central belt (6), the left hand side and the right hand side transverse conveyor belt (7, 8) and in a second switch position, the switch reduces the belt speeds (v_{M}, v_{L}, v_{R}) of the central belt (6), of the left hand side and of the right hand side transverse conveyor belt (7, 8) to a predetermined value, in particular to 25% of the set belt speeds (v_{M}, v_{L}, v_{R}).

14. The combine harvester (1) according to one of the preceding claims, **characterized in that**
behind the central belt (6), the belt cutting assembly (2) has an intake roller (13) for taking crop into the intake channel (19) and/or has at least one header auger (15) for conveying crop to the intake roller (13) and/or to the central belt (6), and **in that** the control unit (20) is configured for controlling a speed (n_{EW}) of the intake roller (13) and/or the speed (n_{LS}) of the header auger (15) as a function of the forward travel speed (v_{F}).

## Revendications

1. Moissonneuse-batteuse (1) comprenant un tablier de coupe à tapis (2), lequel inclut au moins un tapis central (6) pour amener du produit récolté à un rouleau d'alimentation (13) et/ou à un canal d'alimentation (19) d'un convoyeur incliné (3), et des tapis d'alimentation latéraux (7, 8) disposés au moins un à gauche et un à droite par rapport au tapis central (6), le tapis central (6) et les tapis d'alimentation latéraux gauche et droit (7, 8) étant disposés, par rapport au sens de marche (FR), derrière une barre porte-lames (11), le tapis central (6) et les tapis d'alimentation latéraux gauche et droit (7, 8) pouvant être exploités respectivement à une vitesse de tapis individuelle (v_{M}, v_{L}, v_{R}), la moissonneuse-batteuse (1) et/ou le tablier de coupe à tapis (2) comportant une unité de commande (20), **caractérisée en ce que** l'unité de commande (20) est agencée pour commander automatiquement les vitesses de tapis (v_{L}, v_{R}) des tapis d'alimentation latéraux gauche et droit (7, 8) respectivement en fonction d'une vitesse de marche avant (v_{F}), et la vitesse de tapis (v_{M}) du tapis central (6) en fonction de la vitesse de marche avant (v_{F}) ou en fonction de la vitesse de tapis (v_{L}, v_{R}) des tapis d'alimentation latéraux gauche et droit (7, 8).

2. Moissonneuse-batteuse (1) selon la revendication 1, **caractérisée en ce que** les vitesses de tapis (v_{L}, v_{R}) des tapis d'alimentation latéraux gauche et droit (7, 8) et/ou la vitesse de tapis (v_{M}) du tapis central (6) sont couplées à la vitesse de marche avant (v_{F}).

3. Moissonneuse-batteuse (1) selon une des revendications précédentes, **caractérisée en ce que** la vitesse de tapis (v_{M}) du tapis central (6) est couplée aux vitesses de tapis (v_{L}, v_{R}) au moins du tapis d'alimentation latéral gauche et/ou droit (7, 8) .

4. Moissonneuse-batteuse (1) selon une des revendications précédentes, **caractérisée en ce que** la vitesse de tapis (v_{M}) du tapis central (6), la vitesse de tapis (v_{L}) du tapis d'alimentation latéral gauche (7) et/ou la vitesse de tapis (v_{R}) du tapis d'alimentation latéral droit (8) sont couplées à la vitesse de marche avant (v_{F}) de manière spécifique au type de produit récolté, en particulier de façon que, avec des céréales, des vitesses de tapis (v_{M}, v_{L}, v_{R}) assez élevées et, avec du colza, des vitesses de tapis (v_{M}, v_{L}, v_{R}) assez basses soient établies.

5. Moissonneuse-batteuse (1) selon une des revendications précédentes, **caractérisée en ce que** pour le tapis central (6) et les tapis d'alimentation latéraux gauche et droit (7, 8) peuvent être instaurées une vitesse de tapis minimale (v_{M}, v_{L}, v_{R}) et une vitesse de tapis maximale (v_{M}, v_{L}, v_{R}).

6. Moissonneuse-batteuse (1) selon une des revendications précédentes, **caractérisée en ce que** le tapis central (6) présente une vitesse de tapis (v_{M}) supérieure à celle des tapis d'alimentation latéraux gauche et droit (7, 8).

7. Moissonneuse-batteuse (1) selon une des revendications précédentes, **caractérisée en ce que**, en dévers, les vitesses de tapis (v_{L}, v_{R}) des tapis d'alimentation latéraux gauche et droit (7, 8) sont commandées en fonction du dévers du tablier de coupe à tapis (2) et des directions de convoyage (32, 34) des tapis d'alimentation latéraux gauche et droit (7, 8), en particulier la vitesse de tapis (v_{L}, v_{R}) du tapis d'alimentation latéral vers l'amont (7, 8) étant augmentée et/ou la vitesse de tapis (v_{R}, v_{L}) du tapis d'alimentation latéral vers l'aval (8, 7) étant réduite.

8. Moissonneuse-batteuse (1) selon une des revendications précédentes, **caractérisée en ce que** la vitesse de tapis (v_{M}) du tapis central (6) est régulable en fonction du dévers du tablier de coupe à tapis (2).

9. Moissonneuse-batteuse (1) selon une des revendications précédentes, **caractérisée en ce que**, à la sortie d'une culture à récolter, les vitesses de tapis (v_{M}, v_{L}, v_{R}) du tapis central (6) et des tapis d'alimentation latéraux gauche et droit (7, 8) sont ramenées à la vitesse de tapis minimale (v_{M}, v_{L}, v_{R}).

10. Moissonneuse-batteuse (1) selon une des revendications précédentes, **caractérisée en ce que** les vitesses de tapis (v_{L}, v_{R}) des tapis d'alimentation latéraux gauche et droit (7, 8) et la vitesse de tapis (v_{M}) du tapis central (6) sont réglables manuellement dans une plage entre la vitesse de tapis (v_{M}, v_{L}, v_{R}) minimale et la vitesse de tapis (v_{M}, v_{L}, v_{R}) maximale.

11. Moissonneuse-batteuse (1) selon une des revendications précédentes, **caractérisée en ce que** les directions de convoyage (30, 32, 34) du tapis central (6) et des tapis d'alimentation latéraux gauche et droit (7, 8) sont réversibles.

12. Moissonneuse-batteuse (1) selon une des revendications précédentes, **caractérisée en ce que** le convoyeur incliné (3) comporte un convoyeur à chaîne (42), et **en ce qu'**une direction de rotation (37) du rouleau d'alimentation (13) et/ou une direction de convoyage (43) d'un convoyeur à chaîne (42) du convoyeur incliné (3) et la direction de convoyage (30) du tapis central (6) sont réversibles conjointement, et les tapis d'alimentation latéraux gauche et droit (7, 8) sont blocables.

13. Moissonneuse-batteuse (1) selon une des revendications précédentes, **caractérisée en ce que** la moissonneuse-batteuse (1) comporte, dans une cabine de conduite (21), une poignée multifonction (53) avec un commutateur (54), le commutateur (54) inversant, dans une première position de commutation, le tapis central (6) et les tapis d'alimentation latéraux gauche et droit (7, 8) et ramenant, dans une seconde position de commutation, les vitesses de tapis (v_{M}, v_{L}, v_{R}) du tapis central (6) et des tapis d'alimentation latéraux gauche et droit (7, 8) à une valeur définie, en particulier à 25 % des vitesses de tapis (v_{M}, v_{L}, v_{R}) instaurées.

14. Moissonneuse-batteuse (1) selon une des revendications précédentes, **caractérisée en ce que** le tablier de coupe à tapis (2) comporte, derrière le tapis central (6), un rouleau d'alimentation (13) pour introduire le produit récolté dans le canal d'alimentation (19) et/ou au moins une vis de guidage (15) pour convoyer du produit récolté jusqu'au rouleau d'alimentation (13) et/ou jusqu'au tapis central (6), et **en ce que** l'unité de commande (20) est agencée pour commander une vitesse de rotation (n_{EW}) du rouleau d'alimentation (13) et/ou la vitesse de rotation (n_{LS}) de la vis de guidage (15) en fonction de la vitesse de marche avant (v_{F}).
